# DEMANDE DE BREVET EUROPEEN

(11) **EP 4 223 573 A2**
(43) Date de publication de la demande: **09.08.2023**
(21) Numéro de dépôt: 23152688.0
(22) Date de dépôt: 20.01.2023
(51) Int. Cl.: B60K 35/00, B60K 37/06, B60W 50/14

(54) **PROCÉDÉ DE FORMATION D'UN CONDUCTEUR À L'USAGE D'UN SYSTÈME DE CONDUITE PARTIELLEMENT AUTOMATISÉE D'UN VÉHICULE AUTOMOBILE ET VÉHICULE AUTOMOBILE CONFIGURÉ POUR METTRE EN OEUVRE CE PROCÉDÉ**

(30) Priorité: 07.02.2022 FR 2201050
(71) Demandeur: Renault s.a.s, 92100 Boulogne Billancourt (FR)
(72) Inventeur: CUSANNO, Hugo, 78084 Guyancourt cedex (FR); LANGLOIS, Sabine, 78084 Guyancourt cedex (FR); LE-BELLU, Sophie, 78084 Guyancourt cedex (FR); VAILLEAU, Benjamin, 78084 Guyancourt cedex (FR)

(57) **Abrégé**

L'invention concerne un procédé de formation d'un conducteur à l'usage d'un système (7) de conduite partiellement automatisée d'un véhicule (1) automobile, le système étant adapté à détecter au moins une fonction de conduite partiellement automatisée activée définissant un état d'activation du système, comprenant :
- une étape de caractérisation d'une situation d'usage du système, comportant un enregistrement de l'état d'activation, de données relatives au véhicule et à l'environnement du véhicule, et de données d'action relatives aux actions d'un conducteur du véhicule,
- une étape de sélection d'un contenu didactique parmi un ensemble de contenus didactiques stockés dans une mémoire informatique en fonction de la situation d'usage caractérisée, et
- une étape de transmission du contenu didactique sélectionné au conducteur du véhicule, après que la situation d'usage s'est achevée..

L'invention concerne en outre un véhicule automobile comprenant un calculateur embarqué (5) configurée pour mettre en oeuvre le procédé selon l'invention.

## Description

La présente invention concerne de manière générale le domaine de l'assistance à la conduite de véhicules automobiles.

Elle concerne plus particulièrement un procédé de formation d'un conducteur à l'usage d'un système de conduite partiellement automatisée d'un véhicule, ainsi qu'un véhicule automobile comprenant un calculateur embarqué configuré pour mettre en oeuvre ce procédé.

L'invention trouve une application particulièrement avantageuse dans le domaine de la conduite partiellement ou hautement automatisée (autrement désignée sous les termes « conduite semi-automatisée », « conduite partiellement autonome » ou « conduite semi-autonome »).

### Etat de la technique

Dans le domaine susmentionné, les véhicules automobiles sont équipés de systèmes de conduite partiellement ou hautement automatisés. Ces systèmes dispensent le conducteur du véhicule, au moins pendant une période donnée, d'effectuer certaines actions qui sont alors réalisées automatiquement par le véhicule. Parmi les fonctionnalités offertes par les systèmes d'assistance à la conduite, on peut citer le régulateur de vitesse, le régulateur de vitesse adaptatif, l'aide au maintien dans la voie, le freinage automatique, etc.

La sophistication et l'accumulation des systèmes d'assistance à la conduite peut rendre difficile leur prise en main par le conducteur. Ce dernier, soit qu'il n'ait pas confiance en la fiabilité du système, soit qu'il ignore l'existence d'une fonctionnalité ou ne comprend pas comment l'utiliser, n'utilise alors pas le système de façon optimale.

Afin de remédier à ce problème, certains constructeurs mettent à disposition du conducteur des outils didactiques, tels que des manuels d'utilisation, comportant des informations sur le système et/ou proposant des formations à l'utilisation du système. Ces outils sont censés permettre au conducteur d'acquérir les connaissances requises pour mieux maîtriser le système.

Toutefois, la complexité de ces outils didactiques croît avec la complexité des systèmes d'assistance à la conduite, si bien que leur utilisation s'avère parfois laborieuse pour le conducteur. Par conséquent, ces outils pédagogiques ne sont pas non plus employés de façon optimale par le conducteur, ce qui limite sa progression dans son usage du système.

### Présentation de l'invention

Afin de remédier aux inconvénients précités de l'état de la technique, la présente invention propose la sélection d'un contenu didactique pertinent en fonction de l'usage du système de conduite partiellement automatisé.

Plus particulièrement, on propose selon l'invention un procédé de formation d'un conducteur à l'usage d'un système de conduite partiellement ou hautement automatisée d'un véhicule automobile, le système étant adapté à détecter au moins une fonction de conduite partiellement automatisée activée définissant un état d'activation du système, le procédé de formation comprenant :
- une étape de caractérisation d'une situation d'usage du système comportant un enregistrement de l'état d'activation, de données relatives au véhicule et à l'environnement du véhicule, et des données d'action relatives aux actions d'un conducteur du véhicule,
- une étape de sélection d'un contenu didactique parmi un ensemble de contenus didactiques stocké dans une mémoire informatique en fonction de la situation d'usage caractérisée, et
- une étape de transmission du contenu didactique sélectionné au conducteur du véhicule, après que la situation d'usage s'est achevée.

Au sens de l'invention, un contenu didactique est un ensemble d'informations visant à faire acquérir au conducteur les compétences et les connaissances relatives à l'utilisation du système de conduite partiellement automatisée (ce qu'on appelle la situation d'usage) dans une situation contextuelle donnée. Il s'agit d'un contenu théorique dispensé au conducteur une fois la situation d'usage terminée ou d'un contenu d'accompagnement (« coaching », en langue anglaise) qui aide et vise à corriger en temps réel le comportement du conducteur.

Grâce à l'invention, il est possible de proposer au conducteur un contenu didactique qui correspond spécifiquement à l'utilisation qui a été faite du système de conduite partiellement automatisée par le conducteur quelques instants auparavant. Le contenu proposé est donc très susceptible d'intéresser le conducteur, qui sera ainsi incité à en prendre connaissance. Le conducteur du véhicule est en outre dispensé d'une recherche manuelle longue et fastidieuse d'un contenu didactique dans un manuel ou une base de données. Par ailleurs, le procédé selon l'invention permet avantageusement de porter à la connaissance de l'utilisateur des contenus didactiques susceptibles de corriger des comportements erronés ou imparfaits dont le conducteur n'avait pas conscience.

D'autres caractéristiques avantageuses et non limitatives du procédé conforme à l'invention, prises individuellement ou selon toutes les combinaisons techniquement possibles, sont les suivantes :
- l'étape de sélection du contenu didactique comporte une sous-étape de comparaison des données relatives au véhicule et à son environnement et des données d'action avec des valeurs de référence, et une sous étape de sélection du contenu didactique en fonction du résultat de la comparaison,
- l'étape de caractérisation de la situation d'usage comporte une détermination d'un état d'activation adéquat du système de conduite partiellement automatisée qu'il serait convenu d'utiliser en fonction des données relatives au véhicule et à son environnement, l'étape de sélection comportant une sélection du contenu didactique en fonction de l'état d'activation adéquat déterminé,
- l'étape de caractérisation de la situation contextuelle comporte une comparaison de l'état d'activation du système enregistré avec l'état d'activation adéquat, l'étape de sélection du contenu didactique comportant une sélection du contenu didactique en fonction du résultat de la comparaison ;
- l'étape de caractérisation comporte une classification de la situation d'usage parmi plusieurs des familles suivantes :
   O une famille de situations d'usage dans laquelle l'état d'activation enregistré correspond à l'état d'activation adéquat,
   O une famille de situations d'usage dans laquelle au moins une fonction de conduite partiellement automatisée a été désactivée par le système,
   O une famille de situations d'usage dans laquelle l'état d'activation enregistré correspond à l'état d'activation adéquat, et dans laquelle une fonction de conduite partiellement automatisée est désactivée par le conducteur,
   ○ une famille de situations d'usage dans laquelle l'état d'activation enregistré ne correspond pas à l'état d'activation adéquat,
   le contenu didactique étant sélectionné en fonction de la classification de la situation contextuelle,
- l'étape de transmission du contenu didactique comporte une transmission de données relatives à la date et à l'heure de la situation contextuelle et des données relatives à la position,
- l'étape de transmission du contenu didactique au conducteur est réalisée après le premier stationnement (arrêt moteur, ou boîte de vitesse manuelle au point mort, ou boîte de vitesse automatique en configuration « stationnement ») du véhicule qui suit la fin de la situation contextuelle,
- le contenu didactique est transmis au conducteur via une interface de communication visuelle du véhicule,
- le contenu didactique est transmis au conducteur via une interface de communication audio du véhicule.

Selon un autre aspect de l'invention, il est proposé un véhicule automobile comprenant un calculateur embarqué configuré pour mettre en oeuvre le procédé selon l'invention.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[Fig.1] illustre une situation contextuelle d'un véhicule automobile équipé d'un calculateur embarqué ;
[Fig.2] illustre une autre situation contextuelle du véhicule automobile équipé du calculateur embarqué ;
[Fig.3] illustre une autre situation contextuelle du véhicule automobile équipé du calculateur embarqué ;
[Fig.4] illustre une autre situation contextuelle du véhicule automobile équipé du calculateur embarqué.

A titre préliminaire, on notera que les éléments identiques de l'invention représentés sur les différentes figures seront, dans la mesure du possible, référencés par les mêmes signes de référence.

Afin de faciliter la compréhension de l'exposé de l'invention, trois notions seront employées ci-après : la notion de situation contextuelle d'un véhicule automobile, la notion de situation d'usage d'un système de conduite partiellement automatisée, et la notion de fonction de conduite partiellement automatisée.

Au sens de l'invention, une « situation contextuelle » d'un véhicule désigne de façon générale l'environnement du véhicule et le comportement du véhicule dans cet environnement. La situation contextuelle est par exemple définie par l'ensemble des données enregistrées par les capteurs du véhicule, et celles déterminées à partir des données des capteurs.

Au sens de l'invention, une « situation d'usage » du système de conduite partiellement automatisée désigne de façon générale une utilisation particulière par le conducteur du système de conduite partiellement automatisée du véhicule. La situation d'usage est définie par un nombre restreint de données issues des capteurs.

Au sens de l'invention, une « fonction de conduite partiellement automatisée » désigne une capacité du système de conduite partiellement automatisée à commander certains aspects de la conduite du véhicule (par exemple, la direction, le centrage sur voie, la régulation de vitesse, le freinage...), afin de dispenser le conducteur de réaliser la ou les tâches correspondantes, au moins pendant une période donnée. Plusieurs fonctions de conduite partiellement automatisées peuvent être activées simultanément.

La ou les fonctions de conduite partiellement automatisées qui sont activées à un instant donné définissent un état d'activation du système. Par exemple, l'activation simultanée de la fonction de centrage sur voie et de la fonction de régulation de vitesse adaptatif correspond à un état d'activation du système qui est distinct de l'état d'activation correspondant à l'activation de la seule fonction de centrage sur voie et de l'état d'activation correspondant à l'activation de la seule fonction de régulation de vitesse.

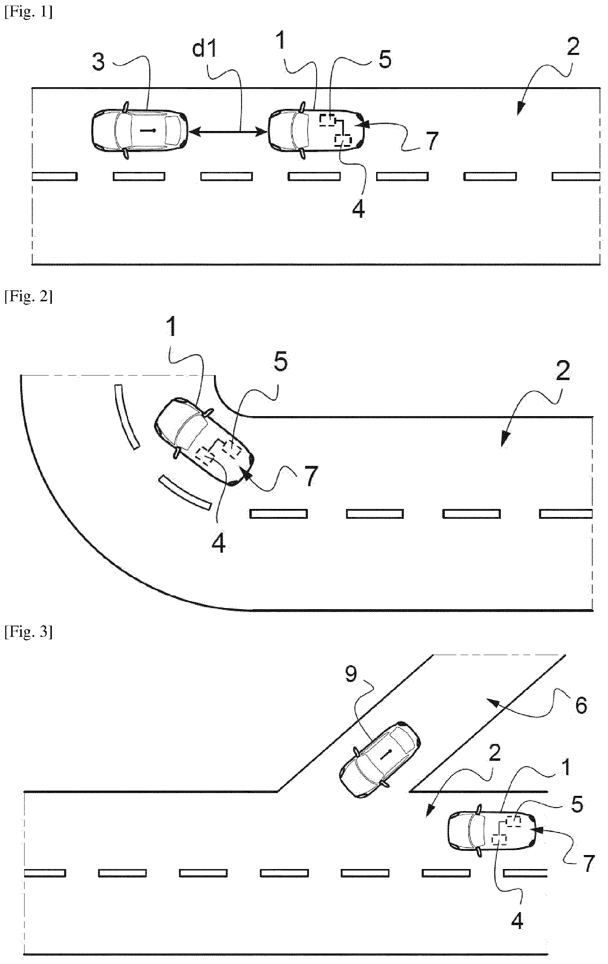

Une situation contextuelle d'un premier véhicule automobile 1 roulant sur une voie de circulation 2 est illustrée sur la [Fig.1].

Cette situation contextuelle peut être partiellement définie ici de la manière suivante. Le premier véhicule 1 (ici une voiture) roule sur la voie de circulation 2 droite, laquelle est empruntée par un deuxième véhicule 3, ici une voiture, qui roule devant le premier véhicule 1, dans le même sens que celui-ci. Le premier véhicule 1 et le deuxième véhicule 3 roulent à une distance d1 l'un de l'autre.

Le premier véhicule 1, qui fait plus précisément l'objet de la présente invention, est équipé d'un système de conduite partiellement automatisée (ci-après appelé « système 7 ») comportant un calculateur embarqué 5 qui comprend par exemple un processeur et une mémoire. Le calculateur embarqué 5 est configuré pour communiquer avec différents composants du premier véhicule 1 afin de mettre en oeuvre une conduite partiellement automatisée du premier véhicule 1. La mémoire du calculateur embarqué 5 comporte ici un logiciel d'exécution du procédé selon l'invention ainsi qu'un ensemble de contenus didactiques.

Le système 7 est adapté à mettre en oeuvre une ou plusieurs fonctions de conduite partiellement automatisée (ci-après appelées « fonctions d'automatisation »). L'état d'activation du système est défini par la fonction d'automatisation activée ou par la combinaison de fonctions d'automatisation activées. L'état d'activation du système peut correspondre à un niveau d'automatisation au sens de la norme SAE J3016. Cette norme définit notamment quatre états d'activation d'un système de conduite partiellement automatisée, appelés « niveaux de conduite partiellement automatisée », ou « niveau d'automatisation ».

Le niveau 1 d'automatisation correspond à un état d'activation du système dans lequel la fonction de centrage sur voie (le système 7 prend le contrôle de la direction du volant) ou bien la fonction de régulation de vitesse (le système 7 ajuste la vitesse du véhicule) est activée.

Le niveau 2 d'automatisation correspond à un état d'activation du système dans lequel les fonctions de centrage sur voie et de régulation de vitesse sont activées simultanément.

Le niveau 3 d'automatisation correspond à un état d'activation du système 7 dans lequel est activée une combinaison de fonctions d'automatisation permettant la commande complète du véhicule automobile par le système 7, sous certaines conditions contextuelles, par exemple lorsque le véhicule est pris dans un embouteillage. Le conducteur doit rester vigilant.

Le niveau 4 d'automatisation correspond à un état d'activation du système 7 dans lequel est activée une combinaison de fonctions d'automatisation permettant la commande complète du véhicule. La vigilance du conducteur n'est pas requise.

Le calculateur embarqué 5 est en communication avec des moyens d'enregistrement 4 du premier véhicule 1.

Les moyens d'enregistrement 4 permettent notamment d'enregistrer :
- des données relatives au véhicule (par exemple sa vitesse, son accélération, notamment son accélération latérale, l'angle au volant, l'état d'activation des clignotants et des feux, la position des pédales,... ),
- des données relatives à l'environnement du véhicule, par exemple la distance d1, sa position géographique, l'heure, son centrage sur la voie de circulation, notamment si le premier véhicule 1 réalise une sortie de voie, le type de voie de circulation, la densité de circulation, la durée avant collision (TTC, « Time to collision », selon la dénomination anglo-saxonne), la vitesse du véhicule, son accélération, notamment son accélération latérale, etc. ,
- des données relatives à l'état d'activation du système 7,par exemple si le système 7 est actif et quel est le niveau d'automatisation correspondant à son état d'activation, les valeurs de consigne des fonctions d'automatisation (par exemple, la vitesse de consigne du régulateur de vitesse), est-ce qu'une requête de reprise en main est émise (ou requête TOR, « Take Over Request » selon la dénomination anglo-saxonne), est-ce qu'une alerte pré-AEB ou AEB est émise (« Automatic Emergency Braking », pour freinage automatique d'urgence, selon la dénomination anglo-saxonne), les états d'activation des voyants du tableau de bord du véhicule, etc. ,
- des données d'actions relatives à des actions effectuées par le conducteur (par exemple l'appui sur un bouton, une pédale, ou un actionnement du volant, l'activation des feux...).

Les moyens d'enregistrement 4 peuvent être implémentés de façon matérielle (capteurs, système GPS...) ou de façon logicielle.

En outre, le calculateur embarqué 5 est configuré pour pouvoir commander de façon automatisée divers éléments du premier véhicule 1, notamment le volant, le système d'accélération, le système de freinage, et les feux du véhicule...

Le premier véhicule 1 est en outre équipé d'une interface de communication permettant au conducteur du premier véhicule 1 d'interagir avec le système 7. Ici, l'interface de communication comporte un écran tactile, des haut-parleurs et un microphone. La communication entre le conducteur du premier véhicule 1 et le système 7 peut ainsi être réalisée à l'aide de messages visuels et de boutons virtuels qui apparaissent sur l'écran tactile et/ou à l'aide de messages audio et de commandes vocales.

Le calculateur embarqué 5 est ainsi adapté à mettre en oeuvre un procédé de formation du conducteur à l'usage du système 7.

Une première étape du procédé comporte une caractérisation d'une situation d'usage du système 7. Une situation d'usage désigne une manière qu'a le conducteur du véhicule 1 de se servir du système 7 dans une situation contextuelle donnée (typiquement, est-ce que le conducteur laisse bien la fonction d'automatisation activée dans un contexte routier qui est favorable à la laisser activée). Une situation d'usage est donc caractérisée par un jeu de données déterminé, notamment ici des données remontées par les moyens d'enregistrement 4 (données relatives aux véhicules, à l'environnement du véhicule 1, à l'état d'activation du système 7, et aux actions du conducteur). En outre, la situation d'usage est caractérisée par le résultat d'une comparaison des données avec des valeurs de référence (par exemple, une comparaison d'un identifiant de l'état d'activation enregistré du système à un identifiant d'un état d'activation adéquat du système, qu'il serait convenu d'utiliser compte tenu de la situation contextuelle).

Dans cette étape, le système 7 enregistre l'état d'activation du système 7 ainsi que des données relatives au véhicule automobile et à son environnement et des données d'action relatives aux actions du conducteur du véhicule, par exemple par l'intermédiaire des moyens d'enregistrement 4 susmentionnés.

Si, à l'issue de cette première étape, aucune situation d'usage n'a pu être caractérisée, alors le procédé reprend au début de la première étape (le procédé fonctionne ainsi en boucle, et se répète à intervalles réguliers). En revanche, si une situation d'usage a pu être caractérisée, le procédé se poursuit.

Une deuxième étape comporte une sélection d'un contenu didactique parmi l'ensemble de contenus didactiques stockés dans la mémoire du calculateur embarqué 5 en fonction de la situation d'usage caractérisée au cours de la première étape.

Une troisième étape comporte une transmission au conducteur du véhicule du contenu didactique sélectionné à l'étape précédente. Cette étape est mise en oeuvre après que la situation d'usage s'est terminée, par exemple quelques secondes ou dizaines de secondes après la situation d'usage ou, de préférence, par mesure de sécurité, une fois le véhicule automobile arrêté, par exemple dès la mise au point mort de la boîte de vitesse du véhicule ou bien dès l'arrêt du moteur du véhicule.

A ce stade, on peut décrire plusieurs exemples d'application de ce procédé, ce qui permettra de bien comprendre comment il est mis en oeuvre. En fonction des actions entreprises par le conducteur et le système 7 dans une situation contextuelle donnée, la situation d'usage pourra être classée parmi quatre familles. Les exemples décrits ci-dessous correspondent à quatre situations d'usage bien définies qui appartiennent chacune à une famille distincte. De nombreuses autres situations d'usage pourraient être envisagées, mais elles appartiendront toutes à l'une de ces familles si bien que le procédé devant alors être utilisé pourra être calqué sur celui utilisé dans l'un des exemples décrits ci-après. A chaque famille de situation d'usage correspond une famille de contenus didactiques associés.

A titre d'exemple, il sera question ici des quatre familles suivantes:
○ une première famille de situations d'usage dans laquelle l'état d'activation enregistré correspond à l'état d'activation adéquat compte tenu de la situation contextuelle ou, en d'autre terme, le conducteur adopte le comportement attendu (ou adéquat) compte tenu de la situation contextuelle. Les contenus didactiques associés à cette famille de situation d'usage ont pour objectif de confirmer le conducteur dans son usage du système 7 par rapport à l'attendu et/ou d'expliquer pourquoi le comportement enregistré n'est pas possible ou cohérent par rapport à la situation contextuelle.
○ une deuxième famille de situations d'usage dans laquelle au moins une fonction d'automatisation est désactivée par le système 7 (deuxième famille). Les contenus didactiques associés à cette famille de situation d'usage ont pour objectif de permettre au conducteur de se construire une représentation du domaine de fonctionnement du système 7 qui soit la plus fidèle et la plus complète possible ;
○ une troisième famille de situations d'usage dans laquelle l'état d'activation enregistré correspond à l'état d'activation adéquat, et dans laquelle une fonction de conduite partiellement automatisée est désactivée par le conducteur. Les contenus didactiques associés à cette famille de situations d'usage ont pour objectif de rassurer le conducteur quant à la capacité du système 7 à gérer certaines situations, et donc d'inciter le conducteur à ne pas désactiver le système 7 lorsque ce n'est pas nécessaire.
○ une quatrième famille de situations d'usage dans laquelle l'état d'activation du système ne correspond pas à l'état d'activation adéquat. Les contenus didactiques associés à cette famille de situations d'usage ont pour objectif d'inciter le conducteur à activer davantage le système 7 et à réaliser les actions attendues au moment opportun.

Dans le premier exemple de situation contextuelle illustré sur la [Fig.1], l'état d'activation enregistré correspond à un niveau d'automatisation égal à 1 (en pratique, une fonction de régulation adaptative de la vitesse du véhicule, plus connue sous le nom de fonction ACC, est activée). La vitesse du premier véhicule 1 est constante et ici nettement supérieure à la vitesse du deuxième véhicule 3, par exemple supérieure d'au moins 15 km.h⁻¹. Ainsi, le premier véhicule 1 se rapproche du deuxième véhicule 3 a une vitesse relative qui est trop importante pour qu'un freinage automatique soit géré par le système 7

La situation d'usage décrite ici appartient à la première famille : le conducteur adopte le comportement attendu (ce qui revient par exemple à tourner le volant pour dépasser le deuxième véhicule 3 et ainsi éviter de le percuter). En particulier, la situation d'usage décrite ici a trait à la capacité du conducteur à reprendre la main sur la conduite du véhicule, c'est-à-dire à désactiver les fonctions d'automatisation, avant que le premier véhicule 1 ne rentre en collision avec le deuxième véhicule 3.

Le calculateur embarqué 5 tient compte ici de trois données enregistrées par les moyens d'enregistrement 4 du véhicule.

Une première donnée est la durée avant collision. Il s'agit de la durée estimée avant que le premier véhicule 1 ne rentre en collision avec le deuxième véhicule 3 si jamais aucune action n'était entreprise pour éviter cette collision. Cette donnée est déterminée à partir de la vitesse du premier véhicule relativement au deuxième véhicule, et à partir de la distance d1.

Une deuxième donnée est un identifiant de l'action du conducteur qui a enclenché la désactivation de la fonction d'automatisation, c'est-à-dire la manière dont le conducteur a repris la conduite manuelle du véhicule 1 (en d'autres termes, on contrôle l'état d'activation du système 7 ainsi que la manière selon laquelle le conducteur commande un changement de cet état d'activation). Le conducteur peut désactiver la fonction d'automatisation de plusieurs manières, par exemple en activant la pédale de frein ou la pédale d'accélérateur, en inclinant le volant d'un angle déterminé ou en appuyant sur un bouton du tableau de bord...

Une troisième donnée est l'état l'activation du clignotant situé du côté par lequel le dépassement est autorisé par la loi, ici le clignotant gauche.

Afin de caractériser la situation d'usage, le calculateur embarqué 5 compare ces données enregistrées avec des valeurs de référence.

Par exemple, deux valeurs de référence sont relatives à la durée avant collision et délimitent une plage de valeurs. Une première valeur de référence correspond à une durée maximale au-dessus de laquelle la reprise en main sera considérée comme tardive, et une deuxième valeur de référence correspond à une durée minimale en dessous de laquelle la reprise en main est considérée être réalisée trop tôt. Ces valeurs de référence peuvent être prédéterminées et enregistrées dans la mémoire du calculateur embarqué 5, ou alors être déterminées en fonction de diverses données remontées par les moyens d'enregistrement 4, par exemple le type de voie de circulation (route, autoroute, ville, etc.), l'état de la voie de circulation, les conditions météorologiques, la vitesse du premier véhicule, etc. Ici, il sera considéré que la première donnée (la durée avant collision) est adéquate si elle comprise entre ces deux valeurs de référence.

Une troisième valeur de référence est relative au mode de reprise en main adéquat de la conduite manuelle du véhicule (l'action ayant déclenché le changement d'état d'activation du système). Ici, puisqu'il s'agit d'éviter une collision, la troisième valeur de référence est valeur minimum d'inclinaison du volant, par exemple ici une inclinaison de 30° . Ici, il sera considéré que la deuxième donnée (le mode de reprise en main choisi par le conducteur) est adéquate si elle est au moins égale à la troisième valeur de référence.

Une quatrième valeur de référence est un identifiant correspondant à l'activation du clignotant gauche. Ici, l'intention du conducteur de dépasser le deuxième véhicule 3 sera confirmée si la troisième donnée est égale à la quatrième valeur de référence.

Dans cet exemple, le conducteur active le clignotant gauche du premier véhicule 1 et désactive les fonctions d'automatisation en inclinant le volant de 40° sur la gauche, alors que la durée avant collision avec le deuxième véhicule est comprise entre la première valeur de référence et la deuxième valeur de référence. Ainsi, les actions du conducteur correspondent aux valeurs de référence.

Lors de la deuxième étape, le calculateur embarqué 5 sélectionne un contenu didactique selon le résultat de la comparaison des données d'action du conducteur avec les valeurs de référence. Ici, le contenu didactique sélectionné vise à confirmer au conducteur qu'il a utilisé correctement le système 7 de conduite partiellement automatisée.

Lors de la troisième étape du procédé, le contenu didactique est transmis au conducteur une fois la situation d'usage terminée.

Au sens de l'invention, il est considéré que la situation d'usage est terminée lorsque par exemple l'état d'activation du système change pour correspondre à l'état d'activation adéquat (le conducteur a adopté le comportement attendu ou le système a modifié de lui-même son état d'activation). Il peut être également considéré que la situation d'usage est terminée alors que l'état d'activation du système n'a pas changé, si l'état d'activation adéquat a changé (le conducteur n'a pas adopté le comportement attendu, et il est trop tard pour le faire).

Ici, le calculateur embarqué 5 transmet, entre 20 secondes et 120 secondes après la reprise en main, par exemple 30 secondes après la reprise en main, une proposition de diffusion du contenu didactique au conducteur sous la forme d'un message vocal transmis via les haut-parleurs du véhicule.

Le conducteur a alors le choix d'accepter la diffusion du contenu didactique ou de la refuser, par exemple en indiquant oralement son choix via le microphone du véhicule. Si le conducteur accepte, alors le contenu didactique est diffusé de façon audio. Il comprend par exemple des données relatives à la situation contextuelle (date, heure, données GPS, position du deuxième véhicules, type de route, rayon de courbure de la route...) et des données relatives à la situation d'usage.

En d'autres termes, compte tenu de la situation contextuelle illustrée ici, le contenu didactique indiquera si le conducteur a eu raison ou tort de désactiver la fonction d'automatisation.

Selon certaines variantes de ce mode de réalisation, le calculateur 5 attend l'arrêt complet du premier véhicule 1 avant de transmettre la proposition au conducteur. Par exemple, la proposition peut être transmise au conducteur une fois le moteur coupé, ou une fois la boîte de vitesse réglée au point mort. Dans ce cas, la diffusion du contenu didactique peut comprendre la diffusion d'images sur l'écran du véhicule, notamment d'images cartographiques relatives à la situation contextuelle et/ou des images issues de caméras installées sur le véhicule, en plus ou à la place de la diffusion via les haut-parleurs. Par exemple, le système 7 peut comporter une mémoire tampon qui permet le stockage des images capturées pendant une durée déterminée. Selon certains modes de réalisation, la mémoire tampon est configurée pour stocker les images capturées durant les quelques secondes qui précèdent la caractérisation de la situation d'usage, par exemple 5 secondes, et les images capturées durant les quelques secondes qui suivent la caractérisation de la situation d'usage, par exemple 5 secondes. Alors, à titre d'exemple, on peut envisager que le procédé soit mis en oeuvre de façon régulière (en boucle) toutes les cinq secondes, compte tenu des images stockées dans la mémoire tampon.

Selon certaines variantes de réalisation, le contenu didactique est rendu accessible depuis un dispositif de communication mobile, par exemple un téléphone portable intelligent (« smartphone », selon la dénomination anglo-saxonne) ou une tablette tactile, afin que le conducteur puisse consulter le contenu didactique en dehors du véhicule. Par exemple, le contenu didactique peut être transmis sur un serveur externe via le réseau internet, ou alors le contenu didactique peut être transférer directement sur le téléphone depuis le véhicule, par exemple par une liaison filaire (USB...) ou non-filaire (Bluetooth...). Le conducteur peut ainsi consulter le contenu didactique en tout lieu, par exemple à son domicile.

Selon certaines variantes de ce mode de réalisation, le système 7 comporte des moyens d'authentification du conducteur du véhicule (par exemple, une sélection d'un profil par le conducteur depuis l'écran tactile du véhicule), et est configuré pour enregistrer les contenus didactiques déjà proposés au conducteur.

Ainsi, si le contenu didactique sélectionné a déjà été proposé au conducteur, ou s'il a été proposé un nombre de fois supérieur à une valeur prédéterminée, alors le calculateur embarqué 5 ne procède pas à l'étape de transmission du contenu didactique sélectionné. Dans ce cas, le procédé reprend au début de la première étape.

Un deuxième exemple de situation contextuelle est illustré sur la [Fig.2]. Dans cette situation contextuelle, le premier véhicule 1 roule seul sur la voie de circulation 2. L'état d'activation du système correspond à un niveau 2 d'automatisation. Ici, le système 7 de conduite partiellement automatisée régule la vitesse du premier véhicule 1 et assure son centrage sur la voie de circulation 2.

La situation d'usage qui sera décrite ici est classée dans la deuxième famille de situations contextuelles : la ou les fonctions d'aide à la conduite sont désactivées automatiquement, c'est-à-dire par le système 7, sans intervention du conducteur du premier véhicule 1.

Afin de caractériser la situation d'usage, le calculateur embarqué 5 tient compte de deux données : l'accélération latérale du véhicule 1 et la sortie du véhicule de la voie de circulation 2 (par exemple une valeur binaire indiquant si le véhicule a empiété ou non sur le marquage au sol délimitant la voie de circulation 2).

La caractérisation de la situation d'usage comporte une comparaison de ces données à deux valeurs de référence.

La première valeur de référence est un seuil d'accélération latérale maximale, au-delà duquel le système 7 n'assurera plus le centrage sur la voie.

La deuxième valeur de référence est un identifiant correspondant à une détection d'une sortie de voie du véhicule, ici la détection d'un empiétement sur le marquage au sol.

Ici, la valeur mesurée d'accélération latérale est supérieure à la valeur de référence, mais le calculateur 5 n'a pas détecté de sortie de voie. Le calculateur 5 désactive les fonctions d'automatisation, par exemple après avoir émis une requête de reprise en main à l'attention du conducteur.

Lors de la deuxième étape du procédé, le calculateur 5 sélectionne un contenu didactique correspondant à la situation d'usage caractérisée, ici un contenu didactique comportant des explications sur la raison de la désactivation automatique des fonctions d'automatisation. Selon qu'une sortie de voie a été détectée (ici, un empiétement sur le marquage au sol), le contenu didactique sélectionné sera plus ou moins précis quant à la raison de la désactivation. Par exemple ici, le contenu didactique indiquera que les fonctions de conduite partiellement automatisée ont été désactivées probablement en raison de la présence d'un virage présentant un rayon de courbure trop faible.

En d'autres termes, dans cette situation contextuelle, le contenu didactique indiquera au conducteur la raison pour laquelle la fonction d'automatisation a été désactivée.

La troisième étape du procédé se déroule de façon analogue à celle décrite en lien avec le premier exemple de situation contextuelle.

Dans un troisième exemple de situation contextuelle illustrée sur la [Fig.3], le premier véhicule 1 circule sur la voie de circulation 2. Un autre véhicule 9 circule sur une voie d'insertion prioritaire 6 et s'apprête à s'insérer sur la voie de circulation 2. La voie de circulation 2 est ici une autoroute. L'état d'activation du système 7 correspond au niveau 3 d'automatisation et le système 7 de conduite hautement automatisé commande entièrement le premier véhicule automobile 1.

La situation d'usage décrite ci-après est classée dans la troisième famille : le conducteur désactive les fonctions d'automatisation alors que cela n'est pas nécessaire.

Afin de caractériser cette situation d'usage, le calculateur embarqué 5 prend en compte plusieurs données. Par exemple ici, le calculateur 5 prend en compte un identifiant de l'état d'activation du système 7, un identifiant de la configuration de la voie de circulation 2, par exemple à partir des données cartographiques du système GPS du véhicule, et le un identifiant correspondant au déclenchement ou non d'une requête de reprise en main (TOR).

Ces données sont ici chacune comparée à une valeur de référence correspondante. Une première valeur de référence, relative à l'état d'activation du système, correspond ici à l'identifiant du niveau 3 d'automatisation. Une deuxième valeur de référence, relative à la voie de circulation, correspond ici à l'identifiant d'une voie d'insertion. Une troisième valeur de référence correspond ici à l'identifiant d'une absence de requête de reprise en main.

Dans cet exemple, à l'approche de la voie de l'intersection entre la voie de circulation 2 et de la voie d'insertion 6, le conducteur du premier véhicule 1 prend l'initiative de reprendre la main et de désactiver les fonctions d'automatisation.

Ainsi, parmi les données susmentionnées prises en compte par le calculateur embarqué 5, seule celle relative à la requête de reprise en main ne correspond pas à sa valeur de référence respective, ici la troisième valeur de référence.

Lors de la deuxième étape E2 du procédé, le calculateur embarqué 5 sélectionne un contenu didactique en fonction des comparaisons réalisées. Ici, le contenu didactique sélectionné comporte des informations visant à rassurer le conducteur sur la capacité du système 7 à gérer l'insertion de véhicule arrivant d'une voie de circulation de type autoroute.

La troisième étape E3 du procédé se déroule de façon analogue à ce qui a été décrit en lien avec le premier exemple de situation contextuelle.

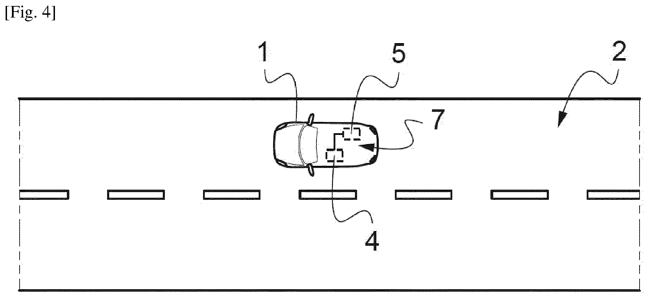

Dans un quatrième exemple de situation contextuelle illustré sur la [Fig.4], le premier véhicule 1 roule sur la voie de circulation 2 alors que le trafic y est faible. Par exemple, la voie de circulation 2 est ici une autoroute et aucun véhicule ne circule sur la voie de circulation à moins de 100 mètres du premier véhicule 1.

La situation d'usage décrite ci-après est classée dans la quatrième famille de situations contextuelles : l'état d'activation enregistré par le système ne correspond pas à l'état d'activation adéquat et, par exemple, le conducteur conduit manuellement le véhicule 1.

Afin de caractériser la situation d'usage illustrée ici, le calculateur 5 tient compte de plusieurs données, notamment la densité de la circulation, par exemple à partir des données émises par d'autres véhicules ou à partir des capteurs de proximité du premier véhicule, le type de la voie de circulation et le niveau d'automatisation correspondant aux fonctions d'automatisation activées.

Le calculateur embarqué 5 utilise ici une valeur de référence : l'état d'activation adéquat. Par exemple, cet état d'activation adéquat est déterminé en fonction de la nature de la voie de circulation et de la densité de circulation. Par exemple ici, la densité de la circulation est inférieure à un seuil prédéterminé et la voie de circulation est de type autoroute. Ici, l'ensemble des niveaux d'automatisation est disponible, c'est-à-dire que n'importe lequel des niveaux d'automatisation conviendrait à la situation, mais puisqu'il s'agit ici d'inciter le conducteur à utiliser au mieux le système de conduite hautement automatisée, il est défini que le niveau d'automatisation adéquat est le niveau le plus élevé, ici le niveau 4 de conduite hautement automatisée.

Ici, aucune fonction d'automatisation n'est activée et le conducteur du premier véhicule 1 roule sur la voie de circulation 2 en conduisant manuellement le premier véhicule.

Lors de la comparaison de l'identifiant de l'état d'activation du système 7 (ici, aucune fonction d'automatisation n'est activée) avec la valeur de référence, le calculateur embarqué 5 détermine que pendant la situation contextuelle, l'état d'activation du système n'était pas l'état d'activation adéquat.

Lors de l'étape E2 du procédé, le calculateur embarqué 5 sélectionne un contenu didactique en fonction du résultat de la comparaison effectuée. Ici, le contenu didactique sélectionné comporte des informations visant à inciter le conducteur à utiliser le système 7 dans les conditions optimales, en lui indiquant par exemple la ou les fonctions d'automatisation qui auraient pu être activées lors de cette situation contextuelle.

La troisième étape E3 du procédé se déroule de façon analogue à ce qui a été décrit en lien avec le premier exemple de situation contextuelle.

Les modes de réalisation et de mise en oeuvre décrits ici ne sont nullement limitatifs.

En particulier, il a été décrit ici plusieurs exemples de situation d'usage définies par la prise en compte par calculateur de certaines données. Toutefois, le procédé selon l'invention n'est pas limité à ces situations d'usage ni à ces données, mais est compatible avec toute situation d'usage envisageable et avec toute combinaison de données envisageable. Ainsi, selon les données prises en compte, ou selon les combinaisons de données prises en compte, de nombreuses situations d'usage peuvent être caractérisées et de nombreux contenus didactiques correspondant peuvent être proposés au conducteur.

A titre d'exemple, les valeurs de référence utilisées pour caractériser les diverses situations d'usage peuvent être relatives à une durée d'activation maximum d'une fonction d'automatisation, à une vitesse maximale éligible, à une valeur d'enfoncement maximale d'une pédale du véhicule, à une valeur d'inclinaison maximale du volant, à une valeur maximale d'un rapport entre l'angle d'inclinaison du volant et la vitesse du véhicule, à une durée maximale avant collision, à une durée minimale avant collision, à un seuil de densité de véhicules sur la voie de circulation, etc.

En outre, les différents modes de réalisation décrits ici ont trait à des situations d'usage distinctes. Cela n'exclue pas que plusieurs situations d'usage puissent être caractérisées simultanément, par exemple en comparant des mêmes données à des valeurs de référence différentes, ou en comparant des jeux de données comportant une ou plusieurs données communes. Dans ce cas, plusieurs contenus didactiques pourront être proposés au conducteur, ou alors le contenu didactique proposé au conducteur tiendra compte des différentes situations contextuelles caractérisées.

Par ailleurs, il a été décrit une communication entre le système 7 et le conducteur par l'intermédiaire d'un écran, de boutons, de haut-parleurs et de microphones. Toutefois, tout autre mode de communication peut être envisagé, notamment une communication haptique utilisant par exemple un système de vibration dans le volant du premier véhicule 1.

## Revendications

1. Procédé de formation d'un conducteur à l'usage d'un système (7) de conduite partiellement automatisée d'un véhicule (1) automobile, le système (7) étant adapté à détecter au moins une fonction de conduite partiellement automatisée activée définissant un état d'activation du système (7), le procédé de formation comprenant :
- une étape de caractérisation d'une situation d'usage du système (7), comportant un enregistrement de l'état d'activation, de données relatives au véhicule (1) et à l'environnement du véhicule (1), et de données d'action relatives aux actions d'un conducteur du véhicule (1),
- une étape de sélection d'un contenu didactique parmi un ensemble de contenus didactiques stocké dans une mémoire informatique en fonction de la situation d'usage **caractérisée**, et
- une étape de transmission du contenu didactique sélectionné au conducteur du véhicule (1), après que la situation d'usage s'est achevée.

2. Procédé selon la revendication 1, dans lequel l'étape de sélection du contenu didactique comporte une sous-étape de comparaison des données relatives au véhicule (1) et à son environnement et des données d'action avec des valeurs de référence, et une sous étape de sélection du contenu didactique en fonction du résultat de la comparaison.

3. Procédé selon la revendication 1 ou 2, dans lequel l'étape de caractérisation de la situation d'usage comporte une détermination d'un état d'activation adéquat du système (7) de conduite partiellement automatisée qu'il serait convenu d'utiliser en fonction des données relatives au véhicule (1) et à son environnement, l'étape de sélection comportant une sélection du contenu didactique en fonction de l'état d'activation adéquat déterminé.

4. Procédé selon la revendication 3, dans lequel l'étape de caractérisation de la situation d'usage comporte une comparaison de l'état d'activation du système (7) enregistré avec l'état d'activation adéquat, l'étape de sélection du contenu didactique comportant une sélection du contenu didactique en fonction du résultat de la comparaison.

5. Procédé selon la revendication 4, dans lequel l'étape de caractérisation comporte une classification de la situation d'usage parmi plusieurs des familles suivantes :
- une famille de situations d'usage dans laquelle l'état d'activation enregistré correspond à l'état d'activation adéquat,
- une famille de situations d'usage dans laquelle au moins une fonction de conduite partiellement automatisée a été désactivée par le système (7),
- une famille de situations d'usage dans laquelle l'état d'activation enregistré correspond à l'état d'activation adéquat, et dans laquelle une fonction de conduite partiellement automatisée est désactivée par le conducteur,
- une famille de situations d'usage dans laquelle l'état d'activation enregistré ne correspond pas à l'état d'activation adéquat,
le contenu didactique étant sélectionné en fonction de la classification de la situation d'usage.

6. Procédé selon l'une quelconque des revendications 1 à 5, dans lequel l'étape de transmission du contenu didactique comporte une transmission de données relatives à la date et à l'heure de la situation contextuelle et de données relatives à la position du véhicule.

7. Procédé selon l'une quelconque des revendications 1 à 6, dans lequel l'étape de transmission du contenu didactique au conducteur est réalisée après le premier stationnement du véhicule (1) qui suit l'étape d'établissement du diagnostic.

8. Procédé selon l'une quelconque des revendications 1 à 7, dans lequel le contenu didactique est transmis au conducteur via une interface de communication visuelle du véhicule.

9. Procédé selon l'une quelconque des revendications 1 à 8, dans lequel le contenu didactique est transmis au conducteur via une interface de communication audio du véhicule.

10. Véhicule automobile (1) comprenant un calculateur embarqué (5) configurée pour mettre en oeuvre un procédé selon l'une quelconque des revendications 1 à 9.
